# EUROPÄISCHE PATENTSCHRIFT

(11) **EP 0 512 385 B1**
(45) Veröffentlichungstag und Bekanntmachung des Hinweises auf die Patenterteilung: **11.06.1997**
(21) Anmeldenummer: 92107276.5
(22) Anmeldetag: 29.04.1992
(51) Int. Cl.: C08G 18/08, C08G 18/58, C08G 18/64, C08G 18/80, C09D 175/04, C09D 5/44

(54) **Verfahren zur Herstellung von kationischen Lackbindemitteln**
Process for the preparation of cationic binders
Procédé de préparation de liants cationiques

(30) Priorität: 07.05.1991 AT 946/91; 10.03.1992 AT 461/92
(43) Veröffentlichungstag der Anmeldung: 11.11.1992
(73) Patentinhaber: Vianova Resins AG, 8402 Werndorf (AT)
(72) Erfinder: Feola, Roland, Dr., A-8045 Graz (AT); Paar, Willibald, Dr., A-8010 Graz (AT); Pampouchidis, Georg, Dr., A-8010 Graz (AT); Gmoser, Johann, A-8045 Graz (AT); Hönig, Helmut, Dr., A-8010 Graz (AT)

(56) Entgegenhaltungen:
- EP-A- 0 218 812
- EP-A- 0 237 997
- EP-A- 0 267 532

## Beschreibung

Die Erfindung betrifft ein Verfahren zur Herstellung von selbstvernetzenden, nach Protonierung wasserverdünnbaren, kationischen Lackbindemitteln auf der Basis von modifizierten Aminoalkylierungsprodukten von Phenolen.

Aus der EP-B1- 0 209 857 und der EP-A-218 812 sind Verfahren zur Herstellung von selbstvernetzenden, nach Protonierung wasserverdünnbaren, kationischen Lackbindemitteln bekannt, die durch Umsetzung eines sekundäre Aminogruppen aufweisenden Aminoalkylierungsprodukts eines Phenols mit einem halbblockierten Diisocyanat und anschließender Reaktion der phenolischen Hydroxylgruppen mit Epoxidverbindungen erhalten werden. Mit den beschriebenen Produkten lassen sich Lacke formulieren, deren Filme nach dem Einbrennen ausgezeichnete Korrosionsschutzeigenschaften aufweisen, wie sie beispielsweise von der Automobilindustrie gefordert werden.

Die in diesen Literaturstellen angegebenen Verfahren erlauben jedoch aufgrund der Reaktionsführung keinen Einsatz von Blockierungsmitteln für Isocyanatgruppen mit einer Abspaltungstemperatur unter 140°C. Die für die Umsetzung der Epoxidverbindungen mit den phenolischen Hydroxlgruppen erforderlichen Temperaturen von mind. 95°C führen bei Verwendung derartiger Blockierungsmittel zu nicht kontrollierbaren Reaktionen, die eine Gelierung des Ansatzes bewirken können. Lacke auf der Basis der Bindemittel gemäß der EP-B1-0 209 857 benötigen somit zur Erzielung der geforderten Filmeigenschaften Einbrenntemperaturen, die über 150°C, vorzugsweise bei 160°C und darüber, liegen.

Überdies werden nach diesem Verfahren relativ hochviskose Produkte erhalten, was einerseits die Mitverwendung größerer Mengen an organischen Hilfslösemitteln notwendig macht, andererseits beim Elektrobeschichtungsverfahren die Abscheidung höherer Schichtstärken erschwert.

Es wurde nun gefunden, daß man die Nachteile der gemäß der EP-B1-0 209 857 und der EP-A-218 812 hergestellten Produkte durch eine Verfahrensänderung überwinden kann, ohne daß dabei das vorteilhafte Gesamtbild der Eigenschaften verschlechtert wird.

Die Erfindung betrifft demgemäß ein Verfahren zur Herstellung von selbstvernetzenden, nach Protonierung wasserverdünnbaren, kationischen Lackbindemitteln auf der Basis von modifizierten Aminoalkylierungsprodukten von Phenolen, welches dadurch gekennzeichnet ist, daß man
(1) ein durchschnittlich mindestens eine NH-Gruppe pro Molekül aufweisendes Aminoalkylierungsprodukt aus 1 Mol eines Monoalkylphenols und/oder eines Monoarylphenols und/oder eines Monoarylalkylphenols mit einer phenolischen Hydroxylgruppe oder gegebenenfalls zwei phenolischen Hydroxylgruppen, aus 1 bis 2 Mol eines primären Alkylamins und/oder primären Alkanolamins und/oder primär-tertiären Alkyldiamins und aus einer den primären Aminogruppen äquimolaren Menge Formaldehyd,
(2) mit einer den vorhandenen sekundären Aminogruppen äquivalenten Menge einer aliphatischen und/oder aromatischen Diepoxidverbindung und gegebenenfalls einer Monoepoxidverbindung umsetzt,
(3) anschließend oder gleichzeitig 50 bis 100 Mol-% der phenolischen Hydroxylgruppen mit einer aliphatischen Monoepoxidverbindung reagiert,
(4) den Ansatz nach vollständiger Umsetzung der Epoxidgruppen bei einer Temperatur von 100 bis 130°C bis zum Erreichen eines Viskositätsminimums hält, und zuletzt
(5) die sekundären Hydroxylgruppen des Reaktionsproduktes anteilig oder zur Gänze mit halbblockierten Diisocyanaten und/oder eine freie NCO-Gruppe aufweisenden Polyisocyanatverbindungen reagiert.

Die Erfindung betrifft weiters die nach diesem Verfahren hergestellten Produkte sowie deren Verwendung, gegebenenfalls in Kombination mit zusätzlichen Vernetzungskomponenten und/oder Hydroxylgruppen tragenden Bindemittelkomponenten, zur Formulierung von wasserverdünnbaren Lacken, insbesondere von kathodisch abscheidbaren Elektrotauchlacken.

Die Herstellung der für das erfindungsgemäße Verfahren geeigneten Aminoalkylierungsprodukte von Phenolen erfolgt nach literaturbekannten Methoden, z. B. nach HOUBEN WEYL, Methoden der organischen Chemie, Band XI /1 (1957).

Als Phenole werden dabei substituierte Phenole, wie Monoalkylphenole, deren Alkylreste vorzugsweise mindestens 4 C-Atome aufweisen, eingesetzt. Vertreter dieser Gruppe sind die o- bzw. p-Butylphenole und ihre höheren Homologe. Ebenso können auch Arylphenole, wie Phenylphenol, oder Arylalkylphenole, wie Bisphenol A, verwendet werden.

Pro Mol Phenol werden 1 bis 2 Mol eines primären Monoalkylamins, wie Butylamin oder seine Isomere und Homologe, und/oder eines primären Alkanolamins, wie Monoethanolamin oder dessen Homologe, und/oder eines primär-tertiären Alkyldiamins, wie Dimethylaminoethylamin oder Diethylaminopropylamin, und eine den primären Aminogruppen äquimolare Menge Formaldehyd eingesetzt.

Die Aminoalkylierung erfolgt in der Weise, daß man den Ansatz mit den Komponenten in Gegenwart eines mit Wasser ein Azeotrop bildenden Lösemittels, wie Toluol, unter Berücksichtigung einer eventuellen Exothermie auf die für die azeotrope Entfernung des Reaktionswassers notwendige Temperatur erwärmt.

Nach Abtrennung der berechneten Wassermenge wird das so erhaltene Reaktionsprodukt, welches pro Molekül durchschnittlich mindestens eine sekundäre Aminogruppe aufweist, gegebenenfalls mit einem aprotischen Lösemittel verdünnt und in der nächsten Reaktionsstufe mit einer den sekundären Aminogruppen äquivalenten Menge einer aliphatischen und/oder aromatischen Diepoxidverbindung umgesetzt. Der über 1 Äquivalent hinausgehende Anteil an vorhandenen sekundären Aminogruppen kann gegebenenfalls auch mit Monoepoxidverbindungen reagiert werden.

Als Diepoxidverbindungen werden handelsübliche Epoxidharze, z. B. auf Basis von Bisphenol A oder von Polyolen, verwendet. Sie weisen vorzugsweise ein xidäquivalentgewicht von 180 bis 1000 auf.

Als Monoepoxidverbindungen werden Glycidylester von Monocarbonsäuren, insbesonders solche von sogenannten KOCH-Säuren, und Glycidylether, wie 2-Ethylhexylglycidylether, eingesetzt.

Die Umsetzung erfolgt bei 95 bis 110°C bis zu einem Epoxidwert von praktisch Null.

Anschließend oder gleichzeitig mit dieser Reaktion werden 50 bis 100 Mol-%, vorzugsweise 95 bis 100 Mol-%, der phenolischen Hydroxylgruppen mit einer vorzugsweise aliphatischen Monoepoxidverbindung umgesetzt.

Nach der vollständigen Umsetzung der Epoxidverbindungen wird der Ansatz auf 100 bis 130°C erhitzt und diese Temperatur wird bis zum Erreichen eines Viskositätsminimums gehalten. Vorzugsweise erfolgt dieser Verfahrensschritt, der für die Erzielung einer geringeren und somit vorteilhaften Viskosität des Endprodukts von wesentlicher Bedeutung ist, bei 115 bis 125°C. Es kann angenommen werden, daß durch diese Temperaturbehandlung ein Abbau von Wasserstoffbrücken erfolgt.

Zuletzt werden die sekundären Hydroxylgruppen des Reaktionsproduktes anteilig oder zur Gänze mit halbblockierten Diisocyanaten und/oder eine freie NCO-Gruppe aufweisenden Polyisocyanatverbindungen reagiert.

Die halbblockierten Diisocyanate werden in bekannter Weise hergestellt, wobei vorzugsweise Diisocyanate mit NCO-Gruppen unterschiedlicher Reaktivität, wie Toluylendiisocyanat oder Isophorondiisocyanat, verwendet werden. Beim Einsatz symmetrischer Diisocyanate, wie Diphenylmethandiisocyanat, ist der Anteil an freiem Diisocyanat möglichst niedrig zu halten, um eine unerwünschte Molekülvergrößerung auf ein Minimum zu beschränken.

Als Blockierungsmittel dienen bevorzugt aliphatische oder aromatische Monoalkohole, welche unter den Einbrennbedingungen, gegebenenfalls in Gegenwart der üblichen Katalysatoren , abgespalten werden. Andere Blockierungsmittel sind beispielsweise Phenole, Oxime, Amine, ungesättigte Alkohole, Caprolactam, etc.

Aufgrund der erfindungsgemäßen Verfahrensweise können auch Blockierungsmittel mit niedrigerer Abspalttemperatur eingesetzt werden, wie Butanonoxim oder primäre Monoalkohole, z. B. Diethylenglykolmonobutylether oder Benzylalkohol.

Als Polyisocyanatverbindungen mit einer freien NCO-Gruppe eignen sich beispielsweise entsprechende Prepolymere aus Diisocyanaten und Polyolen oder Allophanate, wie sie durch intermolekulare Additionsreaktion von halbblockierten Diisocyanaten unter basischer Katalyse erhalten werden.

Bei der Formulierung der Ansätze ist darauf zu achten, daß die Endprodukte die erforderliche Basizität aufweisen, um eine ausreichende Stabilität der wäßrigen Lösung des Bindemittels zu gewährleisten. Die Einführung dieser vorzugsweise auf tertiären Aminogruppen beruhenden Basizität, entsprechend einer Aminzahl von mindestens 30 mg KOH/g, kann einerseits durch die Verwendung von primär-tertiären Diaminen bei der Aminoalkylierung oder andererseits durch den Einsatz von entsprechenden Aminen als Blockierungsmittel für die Halbblockierung der Diisocyanate erfolgen.

Zur Erzielung der Wasserverdünnbarkeit werden die basischen Gruppen des Reaktionsproduktes mit Säuren, vorzugsweise mit Ameisensäure, Essigsäure oder Milchsäure, partiell oder vollständig neutralisiert. Für eine praxisgerechte Verdünnbarkeit genügt üblicherweise eine Neutralisation von 20 bis 60 % der basischen Gruppen, entsprechend einer Menge von ca. 20 bis 60 Millimol Säure pro 100 g Festharz. Die Bindemittel werden dann mit deionisiertem Wasser auf die gewünschte Konzentration verdünnt. Gegebenenfalls werden sie vor der Neutralisation oder vor der Verdünnung oder im teilverdünnten Zustand mit zungskatalysatoren, Pigmenten, Füllstoffen und anderen Zusatzstoffen zu pigmentierten Lacken verarbeitet. Die Formulierung solcher Lacke sowie deren Anwendung im Elektrotauchlackierverfahren sind dem Fachmann bekannt und in der Literatur beschrieben. Die Härtung der abgeschiedenen Überzüge erfolgt bei Temperaturen zwischen 130 und 150°C während 10 bis 30 Minuten.

Soferne die Bindemittel nicht in ausreichendem Maße selbstvernetzende Strukturen aufweisen, können auch zusätzliche Vernetzungskomponenten, wie blockierte Isocyanate, Aminoharze, Phenolharze, oder Hydroxylgruppen tragende Zusatzkomponenten, wie Epoxidharz-Aminaddukte, mitverwendet werden.

Die Lacke können bei entsprechender Formulierung auch durch andere Verfahren, wie Tauchen, Walzen oder Spritzen, aufgebracht werden.

Gegebenenfalls werden die Bindemittel auch in organischen Lösungsmitteln verarbeitet.

In einer spezifischen Ausführungsform des erfindungsgemäßen Verfahrens erhält man kathodisch abscheidbare Lackbindemittel, mit denen Elektrotauchlacke formuliert werden können, welche bei den üblichen Verfahrensbedingungen Lackfilme mit höheren Schichtstärken ergeben, sodaß auf den Zusatz von Hochsiedern verzichtet werden kann.

Diese Ausführungsform ist dadurch gekennzeichnet, daß man
(1A) ein durchschnittlich 2 NH-Gruppen pro Molekül aufweisendes Aminoalkylierungsprodukt aus 1 Mol eines Monoalkylmonophenols, aus 2 Mol eines primären Alkylamins und/oder primär-tertiären Alkyldiamins und aus 2 Mol Formaldehyd,
(2A) mit jeweils 50 Äquivalent-%, bezogen auf die vorhandenen sekundären Aminogruppen, einer Monoepoxidverbindung und einer aliphatischen und/oder aromatischen Diepoxidverbindung gleichzeitig oder aufeinanderfolgend umsetzt,
(3A) anschließend 95 bis 100 Mol-% der phenolischen Hydroxylgruppen mit einer vorzugsweise aliphatischen Monoepoxidverbindung reagiert,
(4A) den Ansatz nach vollständiger Umsetzung der Epoxidgruppen bei einer Temperatur von 100 bis 130°C, vorzugsweise von 115 bis 125°C, bis zum Erreichen eines Viskositätsminimums hält, und
(5A) die sekundären Hydroxylgruppen des Reaktionsprodukts anteilig oder zur Gänze mit halbblockierten Diisocyanaten und/oder eine freie NCO-Gruppe aufweisenden Polyisocyanatverbindungen reagiert.

Für die Herstellung der Aminoalkylierungsprodukte (Komponente 1A) werden Monoalkylphenole mit einem Alkylrest von mindestens 4 C-Atomen eingesetzt.

Als Monoepoxidverbindungen werden bevorzugt aliphatische Monoepoxidverbindungen mit einer Molmasse von mindestens 180 verwendet, wie die bereits angeführten Glycidylester von Monocarbonsäuren und Glycidylether, sowie Epoxidverbindungen, wie Dodecenoxid, deren Epoxidgruppe sich direkt an einer aliphatischen Kette oder einem aliphatischen Ring befindet.

Besonders günstige anwendungstechnische Ergebnisse werden erzielt, wenn die gemäß der spezifischen Ausführungsform hergestellten Produkte, auch nach Protonierung, nur in eingeschränktem Maße wasserlöslich sind. Zur Verbesserung der Badstabilität werden solche Lackbindemittel mit nach Protonierung gut wasserlöslichen, kationischen Epoxidharz-Amin-Addukten kombiniert. Der Anteil dieser Kombinationspartner liegt zwischen 20 und 70 Gew.-%, vorzugsweise zwischen 30 und 60 Gew.-%, bezogen auf den Bindemittelfestkörper der Kombination.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten. (EEW bedeutet Epoxidäquivalentgewicht)

Beispiel 1: In einem geeigneten Reaktionsgefäß werden 94 Tle Phenol (1 Mol) mit 64 Tlen 2-Ethylhexylamin (0,5 Mol), 65 Tlen Diethylaminopropylamin (0,5 Mol) und 91 Tlen Toluol auf 75°C erwärmt. Anschließend werden dem Ansatz unter leichtem Kühlen 33 Tle Paraformaldehyd, 91 % (1 Mol) zugefügt. Die Temperatur wird langsam gesteigert, bis sich eine zügige azeotrope Destillation einstellt. Nach Abtrennen von 21 Tlen Reaktionswasser wird unter Zugabe von 450 Tlen Toluol auf 75°C gekühlt und es werden innerhalb von 30 bis 60 Minuten 475 Tle eines Diepoxidharzes auf Basis von Bisphenol A (EEW 475) portionsweise zugesetzt. Der Ansatz wird bei 95°C gehalten, bis ein Epoxidwert von Null erreicht ist. Nach Zugabe von 250 Tlen (1 Mol) des Glycidylesters einer gesättigten, tertiären C9-C11-Monocarbonsäure (CARDURA® E 10, SHELL) wird bei 95 bis 110°C wieder bis zu einem Epoxidwert von praktisch Null reagiert.

Anschließend wird die Temperatur innerhalb von 30 Minuten auf 120°C gesteigert und so lange gehalten, bis die Viskosität (z. B. gemessen mit einem BROOKFIELD-Rotationsviskosimeter) ein Minimum erreicht hat, was nach ca. 1 bis 2 Stunden der Fall ist. Nach dem Kühlen auf 60°C werden 1008 Tle (3 Mol) eines mit Diethylenglykolmonobutylether halbblockierten Toluylendiisocyanats kontinuierlich zugegeben, wobei die Temperatur 90°C nicht überschreiten soll. Nach Ende der Zugabe wird der Ansatz noch 30 Minuten bei 80°C gerührt. Der Feststoffgehalt beträgt 83 %.

70 Tle (Feststoff) des Endprodukts gemäß Beispiel 1 werden mit 30 Tlen (Feststoff) eines Epoxidaminaddukts als Zusatzkomponente ZK I (Herstellung siehe später) gemischt und 15 Minuten bei 80°C gerührt. Anschließend wird das Lösungsmittel unter Vakuum entfernt, bis ein Feststoffgehalt von 93 bis 95 % erreicht ist. Nach Neutralisation mit ca. 30 Millimol Ameisensäure pro 100 g Festharz wird unter Rühren mit deionisiertem Wasser auf einen Feststoffgehalt von ca. 45 % verdünnt, wobei eine Dispersion mit einer Viskosität von 300 bis 500 mPa.s erhalten wird.

Beispiele 2 bis 8: In gleicher Weise wie im Beispiel 1 werden entsprechend den Angaben in Tabelle 1 weitere Bindemittel hergestellt.

In den Tabellen werden folgende Abkürzungen verwendet:
- EPH I: Diepoxidharz auf Basis von Bisphenol A (EEW ca. 475)
- EPH II: Diepoxidharz auf Basis von Bisphenol A (EEW ca. 190)
- EPH III: Diepoxidharz auf Basis von Polypropylenglykol (EEW ca. 320)
- ME I: Glycidylester von tertiären C9-C11-Monocarbonsäuren (CARDURA E 10; EEW ca. 250)
- ME II: 2-Ethylhexylmonoglycidylether (EEW 186)
- PH: Phenol
- NPH: p-Nonylphenol
- BPH: p-tert.Butylphenol
- BPHA: Bisphenol A
- DEAPA: Diethylaminopropylamin
- EHA: 2-Ethylhexylamin
- MOLA: Monoethanolamin
- BDGL: Diethylenglykolmonobutylether
- BA: Benzylalkohol
- BOX: Butanonoxim
- TDI: Toluylendiisocyanat (handelsübliches Isomerengemisch, 80/20)
- DPMDI: Diphenylmethandiisocyanat
- HCOOH: Ameisensäure

In den Beispielen eingesetzte Isocyanatverbindungen mit einer freien NCO-Gruppe:
- IC I: TDI/BDGL
- IC II: DPMDI/BDGL
- IC III: DPMDI/BA
- IC IV: TDI/BOX
- IC V: DPMDI/BOX
- IC VI: Allophanat, erhalten durch Reaktion eines mit BDGL halbblockierten DPMDI unter basischer Katalyse (Molmasse ca; 1236)
- IC VII: Allophanat auf Basis DPMDI/BA (Molmasse ca. 1974)

Beispiel 9: In einem geeigneten Reaktionsgefäß werden 220 Tle Nonylphenol (1 Mol) mit 258 Tlen 2-Ethylhexylamin (2 Mol) und 200 Tlen Toluol auf 75°C erwärmt. Anschließend werden dem Ansatz unter leichtem Kühlen 66 Tle Paraformaldehyd, 91 % (2 Mol) zugefügt. Die Temperatur wird langsam gesteigert, bis sich eine zügige azeotrope Destillation einstellt. Nach Abtrennen von 42 Tlen Reaktionswasser wird unter Zugabe von 500 Tlen Toluol auf 75°C gekühlt und es werden innerhalb von 30 bis 60 Minuten 250 Tle des Glycidylesters von gesättigten , tertiären C₉-C₁₁-Monocarbonsäuren (Cardura ® E 10, SHELL; EEW ca. 250) portionsweise zugesetzt. Der Ansatz wird bei 80 bis 90°C gehalten, bis ein Epoxidwert von Null erreicht ist. Nach Zugabe von 475 Tlen eines Diepoxidharzes auf Basis von Bisphenol A (EEW 475) wird bei 95 bis 110°C wieder bis zu einem Epoxidwert von Null reagiert. Anschließend werden weitere 186 Tle 2-Ethylhexylmonoglycidylether (EEW 186) zugesetzt und bei 95 bis 110°C erneut bis zum Epoxidwert von Null reagiert.

Anschließend wird die Temperatur innerhalb von 30 Minuten auf 120°C gesteigert und so lange gehalten, bis die Viskosität (z. B. gemessen mit einem BROOKFIELD-Rotationsviskosimeter) ein Minimum erreicht hat, was nach ca. 1 bis 2 Stunden der Fall ist. Nach dem Kühlen auf 60°C werden 1008 Tle (3 Mol) eines mit Diethylenglykomonobutylether halbblockierten Toluylendiisocyanats kontinuierlich zugegeben, wobei die Temperatur 90°C nicht überschreiten soll. Nach Ende der Zugabe wird der Ansatz noch 30 Minuten bei 80°C gerührt. Der Feststoffgehalt beträgt 78%. 60 Tle (Feststoff) des Endprodukts gemäß Beispiel 10 werden mit 40 Tlen (Feststoff) eines Epoxidaminaddukts als Zusatzkomponente ZK III (Herstellung siehe später) gemischt und 15 Minuten bei 80°C gerührt. Anschließend wird das Lösungsmittel unter Vakuum entfernt, bis ein Feststoffgehalt von 93 bis 95 % erreicht ist. Nach Neutralisation mit ca. 32 Millimol Ameisensäure pro 100 g Festharz wird unter Rühren mit deionisiertem Wasser auf einen Feststoffgehalt von ca. 45 % verdünnt, wobei eine Dispersion mit einer Viskosität von 300 bis 500 mPa.s erhalten wird.

Beispiele 10 bis 14: In gleicher Weise wie im Beispiel 9 werden entsprechend den Angaben in Tabelle 2 weitere Bindemittel hergestellt.

### Herstellung der Zusatzkomponenten

- ZK I:: 1 Mol eines Diepoxidharzes auf Basis von Bisphenol A (EEW ca. 475) wird in bekannter Weise mit 2 Mol Diethanolamin umgesetzt. Anlösung: wahlweise 70%ig in Methoxypropanol oder Toluol.
- ZK II:: Aus 640 Tlen EPH III und 129 Tlen (1 Mol) 2-Ethylhexylamin sowie 61 Tlen (1 Mol) MOLA wird bei 80°C durch vollständige Umsetzung aller Epoxidgruppen ein Mol eines disekundären Amins hergestellt. 1900 Tle EPH I, gelöst in 814 Tlen Methoxypropanol, werden zugegeben und mit dem Amin bei 80°C reagiert, bis die den sekundären Aminogruppen entsprechenden Epoxidgruppen verbraucht sind. Anschließend erfolgt die Zugabe von 204 Tlen (2,0 Mol) Dimethylaminopropylamin und 66 Tlen (2,0 Mol) Paraformaldehyd, sowie Xylol als Kreislaufmittel für die azeotrope Destillation bei 90 bis 140°C. Nach erfolgter Oxazolidinbildung wird das Xylol aus dem Reaktionsmedium destillativ entfernt und der Ansatz mit 250 Tlen Ethylenglykolmonobutylether verdünnt. Die Hydroxylzahl an primären Hydroxylgruppen beträgt ca. 19 mg KOH/g, das berechnete Molgewicht ca. 2960 und der Feststoffgehalt 74 %.

Zur Prüfung der gemäß den Beispielen 1 bis 14 hergestellten Bindemittel werden unter Verwendung der nachstehend angeführten Pigmentpaste und von Wasser Lacke mit einem Feststoffgehalt von 18 % und einem Pigment- Bindemittelverhältnis von 0,5:1 hergestellt. Nach einer Homogenisierungsphase von 24 Stunden werden die Lacke auf gereinigte, nicht phosphatierte Stahlbleche elektrisch abgeschieden. Die Abscheidungsbedingungen werden so gewählt, daß die Filme eine Trockenfilmstärke von 22 ± 2 µm aufweisen.

Die eingesetzte Pigmentpaste besteht aus

| | |
|---|---|
| 1000 | Tlen Pastenharz (Feststoff) |
| 252 | Tlen Dibutylzinnoxid (als Katalysator) |
| 421 | Tlen basisches Bleisilikat |
| 60 | Tlen Farbruß |
| 5519 | Tlen Titandioxid |

Als Pastenharz dient ein Bindemittel, welches in der EP-B1- 0 209 857 beschrieben ist (PHV 1, nach Protonierung wasserlöslich, OH-Äquivalent ca. 300) und in folgender Weise hergestellt wird:

500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch Null reagiert. Der Ansatz wird mit 200 Tlen kolmonomethylether auf einen Feststoffgehalt von 64 % verdünnt.

Die Einbrenntemperatur wird entsprechend den Blockierungsmitteln, die für die einzelnen Bindemittel verwendet werden, gewählt, und zwar
für die Beispiele 1 bis 3, 7, 9 bis 12, 14, (BDGL): 150°C
für die Beispiele 4, 8, 13 (BA): 145°C
bzw. für die Beispiele 5 und 6 (BOX): 130°C

Die Einbrennzeit beträgt in allen Fällen 20 Minuten.

Alle Lackierungen zeigen ausgezeichnete mechanische Eigenschaften (Schlagtest nach ASTM-D-2794: mind. 80 i.p.; kein Abplatzen beim Dornbiegeversuch nach ASTM-D-522-60) sowie ausgezeichnete Korrosionsfestigkeit auf nicht vorbehandeltem Stahlblech (Salzsprühtest nach ASTM-B-117-64: Angriff am Kreuzschnitt nach 360 Stunden Prüfdauer: max. 2 mm).

Gleiche Ergebnisse werden bei den gemäß der EP-B1-0 209 857 hergestellten Produkten erst bei Einbrenntemperaturen von mind. 160°C erzielt.

Für eine Erhöhung der unter üblichen Abscheidungsbedingungen erzielbaren Filmstärken auf 20 bis 30 µm (bei einwandfreier Oberfläche) benötigen die mit den erfindungsgemäß hergestellten Produkten der Beispiele 1 bis 8 formulierten Elektrotauchlacke nur geringe Zusätze von Texanol (5 Gew.-% bezogen auf Feststoffgehalt an Bindemittel), während die Elektrotauchlacke mit Produkten gemäß den Beispielen 9 bis 14 ohne Zusätze von Texanol oder von anderen Hochsiedern formuliert werden können.

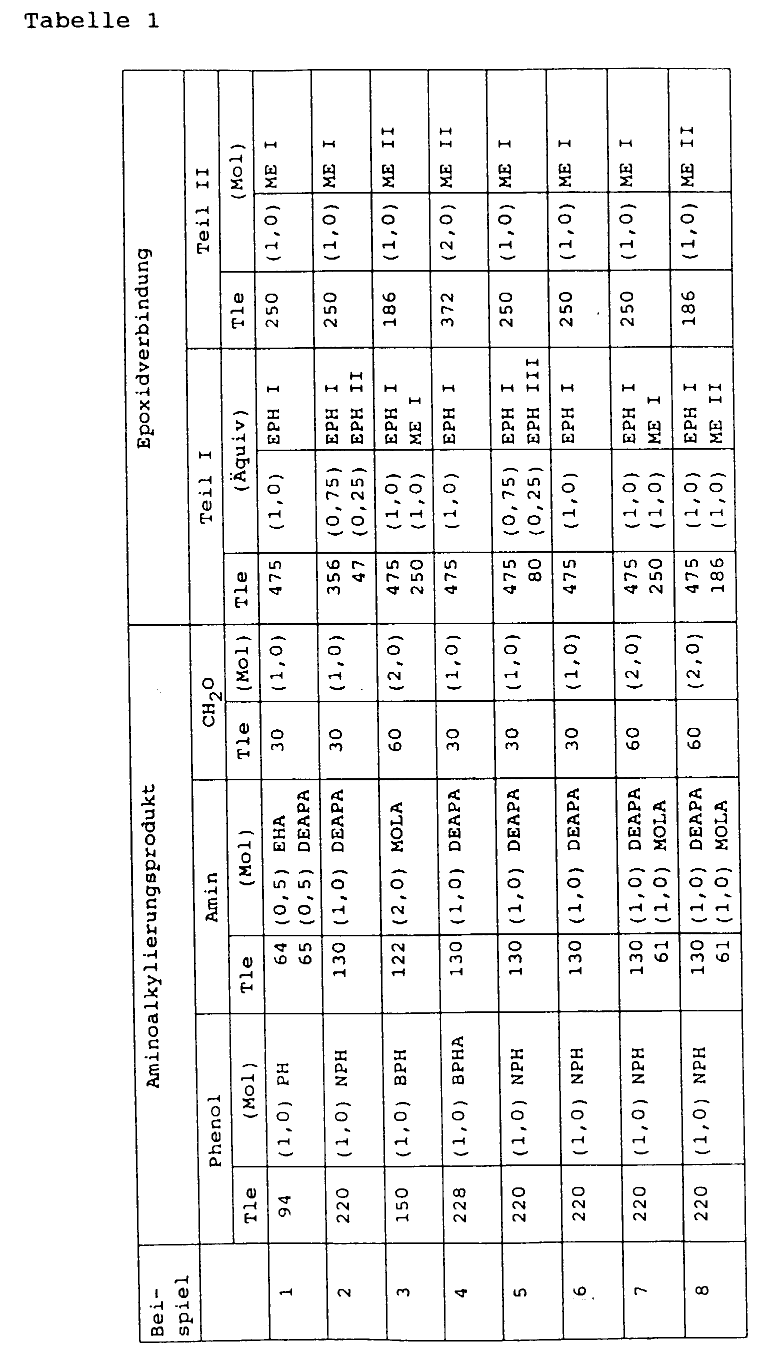

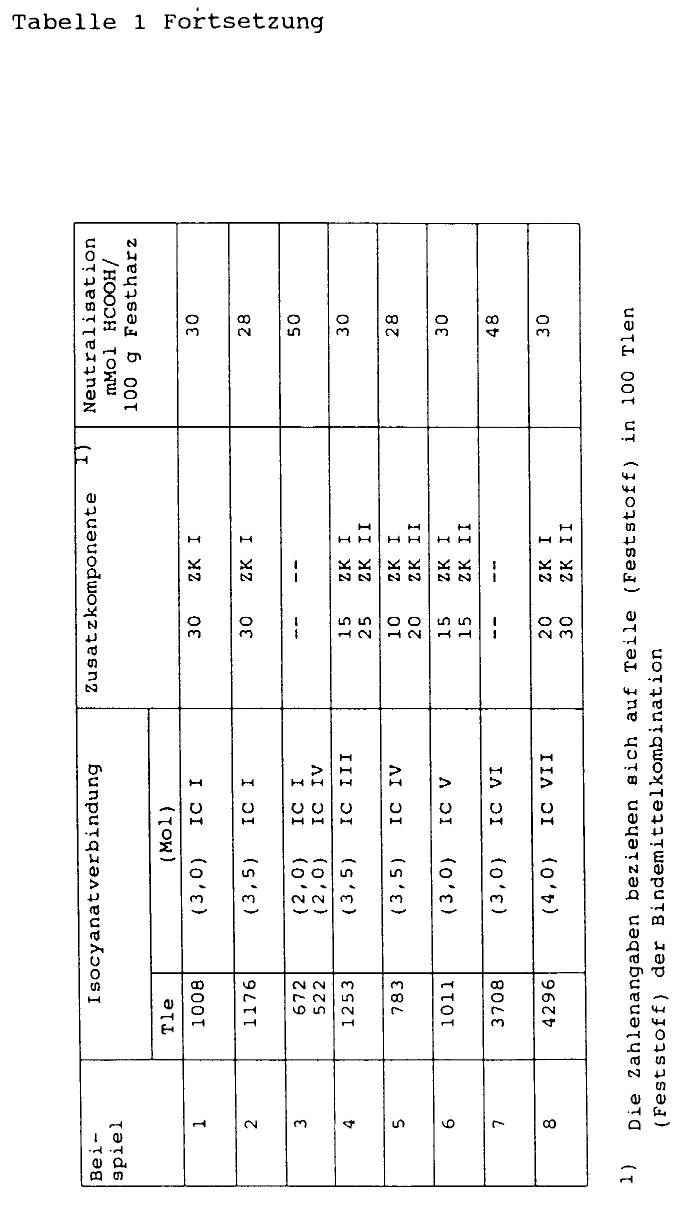

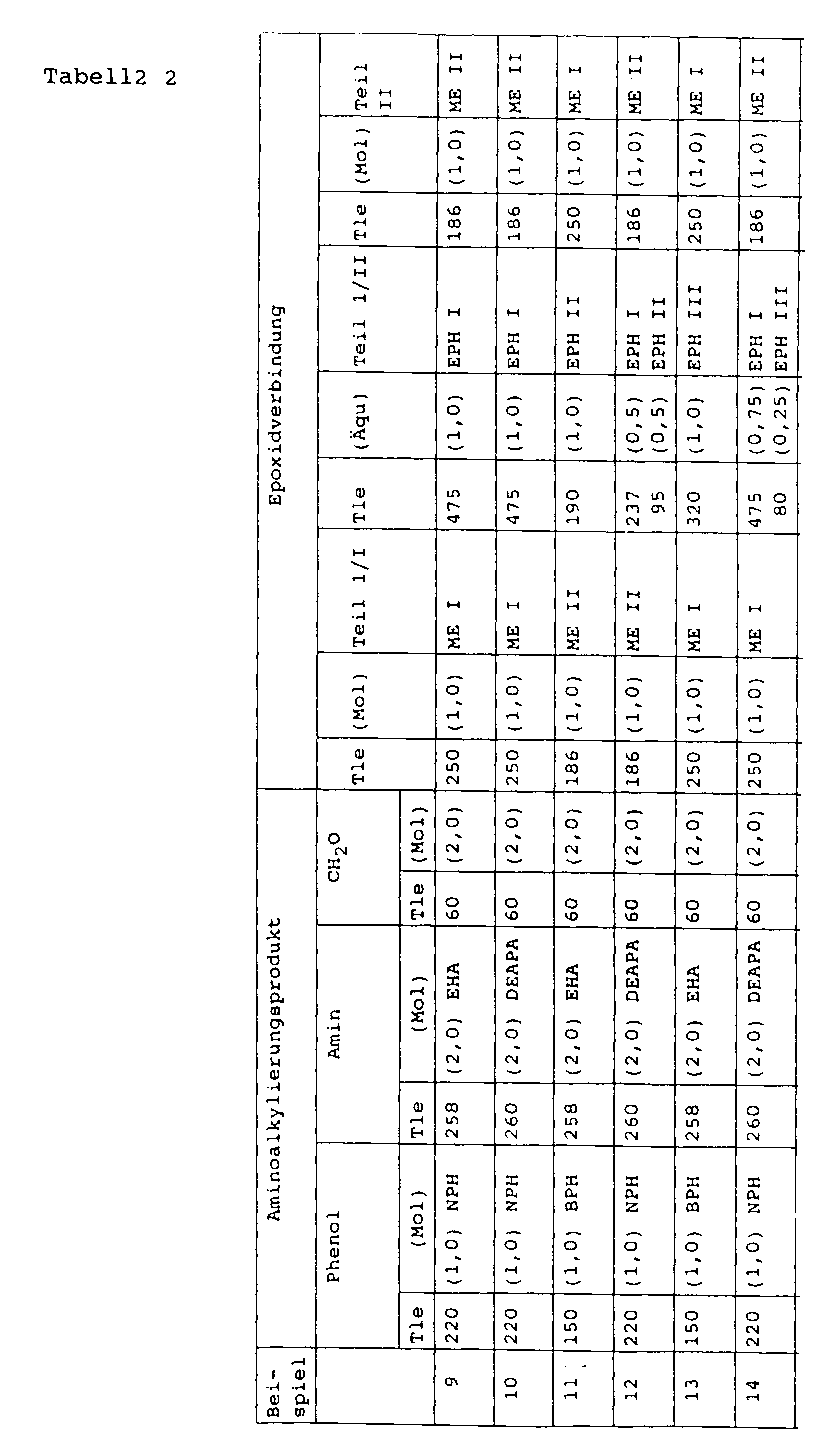

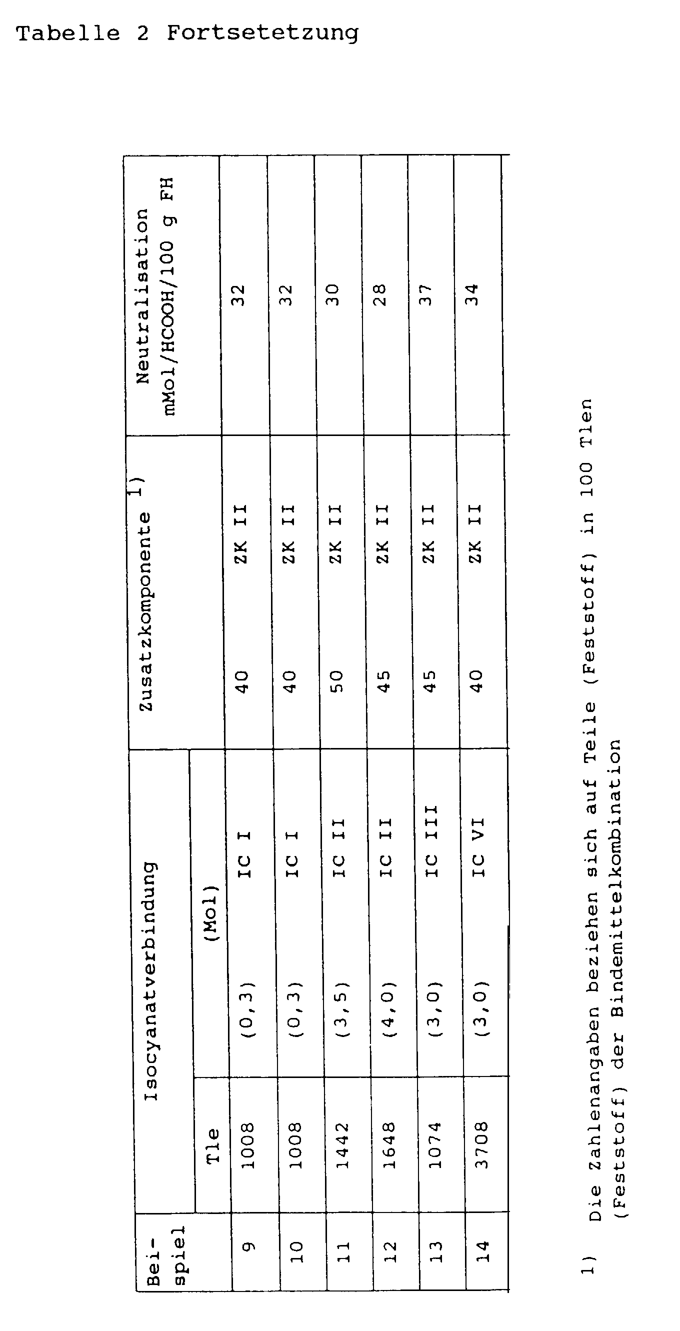

## Patentansprüche

1. Verfahren zur Herstellung von selbstvernetzenden, nach Protonierung wasserverdünnbaren, kationischen Lackbindemitteln auf der Basis von modifizierten Aminoalkylierungsprodukten von Phenolen, dadurch gekennzeichnet, daß man
(1) ein durchschnittlich mindestens eine NH-Gruppe pro Molekül aufweisendes Aminoalkylierungsprodukt aus 1 Mol eines Monoalkylphenols und/oder eines Monoarylphenols und/oder eines Monoarylalkylphenols mit einer phenolischen Hydroxylgruppe oder gegebenenfalls zwei phenolischen Hydroxylgruppen, aus 1 bis 2 Mol eines primären Alkylamins und/ oder primären Alkanolamins und/oder primär-tertiären Alkyldiamins und aus einer den primären Aminogruppen äquimolaren Menge Formaldehyd, mit
(2) einer den vorhandenen sekundären Aminogruppen äquivalenten Menge einer aliphatischen und/ oder aromatischen Diepoxidverbindung und gegebenenfalls einer Monoepoxidverbindung umsetzt,
(3) anschließend oder gleichzeitig 50 bis 100 Mol-% der phenolischen Hydroxylgruppen mit einer aliphatischen Monoepoxidverbindung reagiert,
(4) den Ansatz nach vollständiger Umsetzung der Epoxidgruppen bei einer Temperatur von 100 bis 130°C bis zum Erreichen eines Viskositätsminimums hält, und zuletzt
(5) die sekundären Hydroxylgruppen des Reaktionsproduktes anteilig oder zur Gänze mit halbblockierten Diisocyanaten und/oder eine freie NCO- Gruppe aufweisenden Polyisocyanatverbindungen reagiert.

2. Verfahren nach Anspruch 1, dadurch gekennzeichnet, daß man in Stufe (2) den über 1 Äquivalent hinausgehenden Anteil an vorhandenen sekundären Aminogruppen mit einer Monoepoxidverbindung umsetzt.

3. Verfahren nach Anspruch 1, dadurch gekennzeichnet, daß man als Blockierungsmittel für die Isocyanatverbindungen Butanonoxim oder primäre Monoalkohole einsetzt.

4. Verfahren nach Anspruch 1, dadurch gekennzeichnet, daß man
(1A) ein durchschnittlich 2 NH-Gruppen pro Molekül aufweisendes Aminoalkylierungsprodukt aus 1 Mol eines Monoalkylmonophenols, aus 2 Mol eines primären Alkylamins und/oder primär-tertiären Alkyldiamins und aus 2 Mol Formaldehyd,
(2A) mit jeweils 50 Äquivalent-%, bezogen auf die vorhandenen sekundären Aminogruppen, einer Monoepoxidverbindung und einer aliphatischen und/oder aromatischen Diepoxidverbindung gleichzeitig oder aufeinanderfolgend umsetzt,
(3A) anschließend 95 bis 100 Mol-% der phenolischen Hydroxylgruppen mit einer aliphatischen Monoepoxidverbindung reagiert,
(4A) den Ansatz nach vollständiger Umsetzung der Epoxidgruppen bei einer Temperatur von 100 bis 130°C bis zum Erreichen eines Viskositätsminimums hält, und
(5A) die sekundären Hydroxylgruppen des Reaktionsprodukts anteilig oder zur Gänze mit halbblockierten Diisocyanaten und/oder eine freie NCO-Gruppe aufweisenden Polyisocyanatverbindungen reagiert.

5. Verfahren nach Anspruch 4, dadurch gekennzeichnet, daß man als Phenole für die Herstellung der Aminoalkylierungsprodukte (Komponente 1A) Monoalkylphenole mit einem Alkylrest von mindestens 4 C-Atomen verwendet.

6. Verfahren nach Anspruch 4, dadurch gekennzeichnet, daß man als Monoepoxidverbindungen aliphatische Monoepoxidverbindungen mit einer Molmasse von mindestens 180, wie Glycidylester von Monocarbonsäuren und/oder Glycidylether und/oder Epoxidverbindungen, deren Epoxidgruppe sich direkt an einer aliphatischen Kette oder einem aliphatischen Ring befindet, verwendet.

7. Verfahren nach Anspruch 4, dadurch gekennzeichnet, daß man als Blockierungsmittel für die Isocyanatverbindungen primäre Monoalkohole einsetzt.

8. Verfahren nach den Ansprüchen 3 und 7, dadurch gekennzeichnet, daß man als primäre Monoalkohole Diethylenglykolmonoalkylether oder Benzylalkohol einsetzt.

9. Selbstvernetzende, nach Protonierung wasserverdünnbare, kationische Lackbindemittel auf der Basis von modifizierten Aminoalkylierungsprodukten von Phenolen, hergestellt nach den Ansprüchen 1 bis 8.

10. Verwendung der nach den Ansprüchen 1 bis 3 und 8 hergestellten Lackbindemittel, gegebenenfalls in Kombination mit zusätzlichen Vernetzungskomponenten und/oder Hydroxylgruppen tragenden Bindemittelkomponenten, zur Formulierung von wasserverdünnbaren Lacken, insbesonders von kathodisch abscheidbaren Elektrotauchlacken.

11. Verwendung der nach den Ansprüchen 4 bis 8 hergestellten Lackbindemittel in Kombination mit nach Protonierung wasserlöslichen, kationischen Epoxidharz-Amin-Addukten, sowie gegebenenfalls mit zusätzlichen Vernetzungskomponenten, zur Formulierung von kathodisch abscheidbaren Elektrotauchlacken.

## Claims

1. Process for the preparation of self-crosslinking cationic paint binders which can be diluted with water after protonation and are based on modified aminoalkylation products of phenols, characterised in that
(1) an aminoalkylation product, containing on average at least one NH group per molecule, from 1 mol of a monoalkylphenol and/or of a monoarylphenol and/or of a monoarylalkylphenol having one phenolic hydroxyl group or if appropriate two phenolic hydroxyl groups, from 1 to 2 mol of a primary alkylamine and/or primary alkanolamine and/or primary-tertiary alkyldiamine and from an amount of formaldehyde equimolar to the primary amino groups,
(2) is reacted with an amount of an aliphatic and/or aromatic diepoxide compound and if appropriate of a monoepoxide compound equivalent to the secondary amino groups present,
(3) 50 to 100 mol% of the phenolic hydroxyl groups are subsequently or simultaneously reacted with an aliphatic monoepoxide compound,
(4) after complete reaction of the epoxide groups, the batch is kept at a temperature of 100 to 130°C until a viscosity minimum is reached, and finally
(5) a proportion or all of the secondary hydroxyl groups of the reaction product are reacted with semi-blocked diisocyanates and/or polyisocyanate compounds containing a free NCO group.

2. Process according to Claim 1, characterised in that, in stage (2), the amount of secondary amino groups present in excess of 1 equivalent is reacted with a monoepoxide compound.

3. Process according to Claim 1, characterised in that butanone oxime or primary monoalcohols are employed as blocking agents for the isocyanate compounds.

4. Process according to Claim 1, characterised in that
(1A) an aminoalkylation product, containing on average 2 NH groups per molecule, from 1 mol of a monoalkylmonophenol, from 2 mol of a primary alkylamine and/or primary-tertiary alkyldiamine and from 2 mol of formaldehyde,
(2A) is reacted with in each case 50 equivalent%, based on the secondary amino groups present, of a monoepoxide compound and of an aliphatic and/or aromatic diepoxide compound, simultaneously or in succession,
(3A) 95 to 100 mol% of the phenolic hydroxyl groups are then reacted with an aliphatic monoepoxide compound,
(4A) after complete reaction of the epoxide groups, the batch is kept at a temperature of 100 to 130°C until a viscosity minimum is reached, and
(5A) a proportion or all of the secondary hydroxyl groups of the reaction product are reacted with semi-blocked diisocyanates and/or polyisocyanate compounds containing a free NCO group.

5. Process according to Claim 4, characterised in that monoalkylphenols having an alkyl radical containing at least 4 C atoms are used as the phenols for the preparation of the aminoalkylation products (component 1A).

6. Process according to Claim 4, characterised in that aliphatic monoepoxide compounds having a molecular weight of at least 180, such as glycidyl esters of monocarboxylic acids and/or glycidyl ethers and/or epoxide compounds, the epoxide group of which is located directly on an aliphatic chain or an aliphatic ring, are used as the monoepoxide compounds.

7. Process according to Claim 4, characterised in that primary monoalcohols are employed as blocking agents for the isocyanate compounds.

8. Process according to Claims 3 and 7, characterised in that diethylene glycol monoalkyl ethers or benzyl alcohol are employed as the primary monoalcohols.

9. Self-crosslinking cationic paint binders which can be diluted with water after protonation and are based on modified aminoalkylation products of phenols, prepared according to Claims 1 to 8.

10. Use of the paint binders prepared according to Claims 1 to 3 and 8, if appropriate in combination with additional crosslinking components and/or binder components which carry hydroxyl groups, for formulating water-dilutable paints, in particular electrodeposition paints which can be deposited cathodically.

11. Use of the paint binders prepared according to Claims 4 to 8 in combination with cationic epoxy resin-amine adducts which are water-soluble after protonation, and if appropriate with additional crosslinking components, for formulating electrodeposition paints which can be deposited cathodically.

## Revendications

1. Procédé de préparation de liants cationiques pour peintures, autoréticulants, diluables à l'eau après protonation, à base de produits d'aminoalkylation de phénols modifiés, caractérisé en ce que
(1) on fait réagir un produit d'aminoalkylation présentant en moyenne au moins un groupe NH par molécule constitué à partir de 1 mole d'un monoalkylphénol et/ou d'un monoarylphénol et/ou d'un monoarylalkylphénol ayant un groupe hydroxyle phénolique ou éventuellement deux groupes hydroxyles phénoliques, de 1 à 2 moles d'une alkylamine primaire et/ou d'une alcanolamine primaire et/ou d'une alkyldiamine primaire-tertiaire et d'une quantité de formaldéhyde équimolaire des groupes amino primaires, avec
(2) une quantité équivalente aux groupes amino secondaires présents d'un composé diépoxyde aliphatique et/ou aromatique et eventuellement d'un composé monoépoxyde,
(3) ensuite ou en même temps on fait réagir 50 à 100 mol% des groupes hydroxyles phénoliques avec un composé monoépoxyde aliphatique,
(4) après la réaction complète des groupes époxydes on maintient la charge à une température de 100 à 130°C jusqu'à ce que l'on atteigne un minimum de viscosité, et enfin
(5) on fait réagir les groupes hydroxyles secondaires du produit réactionnel en partie ou totalement avec des diisocyanates semibloqués et/ou des composés polyisocyanates présentant un groupe NCO libre.

2. Procédé selon la revendication 1 caractérisé en ce que, dans l'étape (2), on fait réagir la fraction de groupes amino secondaires présents qui dépasse 1 équivalent avec un composé monoépoxyde.

3. Procédé selon la revendication 1 caractérisé en ce que l'on utilise comme agent de blocage pour les composés isocyanates la butanone-oxime ou des monoalcools primaires.

4. Procédé selon la revendication 1 caractérisé en ce que
(1A) on fait réagir simultanément ou successivement un produit d'aminoalkylation présentant en moyenne 2 groupes NH par molécule constitué à partir de 1 mole d'un monoalkylmonophénol, de 2 moles d'une alkylamine primaire et/ou d'une alkyldiamine primaire-tertiaire et de 2 moles de formaldéhyde, avec
(2A) dans chaque cas 50 % en équivalents, par rapport aux groupes amino secondaires présents, d'un composé monoépoxyde et d'un composé diépoxyde aliphatique et/ou aromatique,
(3A) ensuite on fait réagir 95 à 100 mol% des groupes hydroxyles phénoliques avec un composé monoépoxyde aliphatique,
(4A) après la réaction complète des groupes époxydes on maintient la charge à une température de 100 à 130°C jusqu'à ce que l'on atteigne un minimum de viscosité, et
(5A) on fait réagir les groupes hydroxyles secondaires du produit réactionnel en partie ou totalement avec des diisocyanates semibloqués et/ou des composés polyisocyanates présentant un groupe NCO libre.

5. Procédé selon la revendication 4 caractérisé en ce que l'on utilise comme phénols pour la préparation des produits d'aminoalkylation (composant 1A) des monoalkylphénols ayant un reste alkyle d'au moins 4 atomes de carbone.

6. Procédé selon la revendication 4 caractérisé en ce que l'on utilise comme composés monoépoxydes des composés monoépoxydes aliphatiques ayant une masse molaire d'au moins 180, tels que des glycidylesters d'acides monocarboxyliques et/ou des glycidyléthers et/ou des composés époxydes dont le groupe époxyde est situé directement sur une chaîne aliphatique ou un cycle aliphatique.

7. Procédé selon la revendication 4 caractérisé en ce que l'on utilise des monoalcools primaires comme agent de blocage pour les composés isocyanates.

8. Procédé selon les revendications 3 et 7 caractérisé en ce que l'on utilise comme monoalcools primaires des diéthylèneglycolmonoalkyléthers ou l'alcool benzylique.

9. Liants cationiques pour peintures, autoréticulants, diluables à l'eau après protonation, à base de produits d'aminoalkylation de phénols modifiés préparés selon les revendications 1 à 8.

10. Utilisation des liants pour peintures préparés selon les revendications 1 à 3 et 8, éventuellement en combinaison avec des composants de réticulation et/ou des composants liants portant des groupes hydroxyles supplémentaires pour la formulation de peintures diluables à l'eau, en particulier de peintures pour trempage électrophorétique déposables cathodiquement.

11. Utilisation des liants pour peintures préparés selon les revendications 4 à 8 en combinaison avec des produits d'addition résine époxyde-amine cationiques, hydrosolubles après protonation, et éventuellement avec des composants de réticulation supplémentaires, pour la formulation de peintures pour trempage électrophorétique déposables cathodiquement.
